# EUROPÄISCHE PATENTSCHRIFT

(11) **EP 3 195 764 B1**
(45) Veröffentlichungstag und Bekanntmachung des Hinweises auf die Patenterteilung: **08.05.2019**
(21) Anmeldenummer: 17152048.9
(22) Anmeldetag: 18.01.2017
(51) Int. Cl.: A47J 31/06, A47J 31/44

(54) **TRÄGERVORRICHTUNG FÜR EIN AUSGANGSMATERIAL EINER HEISSGETRÄNKZUBEREITUNG**
SUPPORT DEVICE FOR A STARTING MATERIAL OF A HOT BEVERAGE PREPARATION
DISPOSITIF DE SUPPORT DE MATÉRIAU DE BASE D'UN DISPOSITIF DE PRÉPARATION DE BOISSONS CHAUDES

(30) Priorität: 21.01.2016 DE 102016101049
(43) Veröffentlichungstag der Anmeldung: 26.07.2017
(73) Patentinhaber: Gebr. Graef GmbH & Co. KG, 59757 Arnsberg (DE)
(72) Erfinder: Baumann, Wolfgang, 59494 Ense (DE)
(74) Vertreter: Basfeld, Rainer

(56) Entgegenhaltungen:
- EP-A1- 1 582 127
- WO-A1-96/27316
- GB-A- 2 503 283

## Beschreibung

Die vorliegende Erfindung betrifft eine Trägervorrichtung für ein Ausgangsmaterial einer Heißgetränkzubereitung, insbesondere Siebträger, gemäß dem Oberbegriff des Anspruchs 1 sowie eine Maschine zur Zubereitung eines Heißgetränks, insbesondere Espressomaschine, mit einer derartigen Trägervorrichtung.

Auf dem Markt der Maschinen für die Zubereitung von Heißgetränken gibt es neben Espressomaschinen Maschinen, die Kaffeepads oder Kaffeekapseln aufnehmen können.

Unter einem Kaffeepad versteht man eine Ein-Portionen-Dosis von Kaffeepulver in einer Portionsverpackung, die einem Teebeutel ähnelt. Anstelle von Kaffeepulver können in die Pads auch Kakao oder Kaffeepulver-Milchpulver-Mischungen oder dergleichen eingebracht sein. Auch Tee kann in Pads gefüllt und von entsprechenden Maschinen zubereitet werden.

Eine für die Heißgetränkzubereitung verwendete Kapsel besteht zumeist aus einer Aluminiumhülle, in die gemahlener Kaffee eingebracht ist. Anstelle von Kaffee können auch bei Kapseln andere Ausgangsmaterialien für das Heißgetränk wie beispielsweise Kakao verwendet werden.

Eine Trägervorrichtung und eine Maschine der eingangs genannten Art sind aus der GB 2 503 283 A bekannt. Die darin beschriebene Trägervorrichtung umfasst eine Halterung die mit einem Handgriff verbunden ist. In der Halterung ist eine als unteres Teil von Aufnahmemitteln dienende perforierte Fläche mit einer Mehrzahl von Vorsprüngen vorgesehen. Auf diese Fläche kann eine Kaffeekapsel aufgebracht werden. An dem Handgriff ist ein oberes Teil von Aufnahmemitteln schwenkbar angebracht, das nach dem Aufbringen einer Kaffeekapsel auf die perforierte Fläche in die Halterung hinein verschwenkt werden kann, so dass es von oben auf die Kaffeekapsel drückt und diese in der Halterung festlegt.

Eine weitere Trägervorrichtung für ein Ausgangsmaterial einer Heißgetränkzubereitung, eine weitere Maschine zur Zubereitung eines Heißgetränks sowie weitere Aufnahmemittel für derartige Trägervorrichtungen sind aus der WO 96/27316 A1 bekannt. An der Maschine ist eine schwenkbare Halterung angebracht, in die ein mit einem Handgriff versehener Siebträger einbringbar ist. In den Siebträger können sowohl loses Kaffeepulver als auch Kaffeepulver in Einzelverpackungen eingebracht werden.

Das der vorliegenden Erfindung zugrunde liegende Problem ist die Schaffung einer Trägervorrichtung und/oder einer Maschine der eingangs genannten Art, die eine größere Variabilität bieten, so dass der Benutzer idealerweise nur noch eine Maschine für die Zubereitung von Heißgetränken, insbesondere Kaffee, sowohl aus pulverförmigem Ausgangsmaterial, als auch aus in Behältnissen wie Pads und Kapseln vorgesehenem Ausgangsmaterial benötigt.

Dies wird erfindungsgemäß durch eine Trägervorrichtung der eingangs genannten Art mit den kennzeichnenden Merkmalen des Anspruchs 1 sowie durch eine Maschine der eingangs genannten Art mit den Merkmalen des Anspruch 6 erreicht. Die Unteransprüche betreffen bevorzugte Ausgestaltungen der Erfindung.

Gemäß Anspruch 1 ist vorgesehen, dass die an der Unterseite der Halterung angeordnete Öffnung derart gestaltet ist, dass durch die Öffnung in Gebrauchsstellung ein Teil der Aufnahmemittel zumindest abschnittsweise nach unten herausragt. Auf diese Weise können in der Halterung auch größer dimensionierte Aufnahmemittel gehalten werden, so dass die Trägervorrichtung für die Aufnahme unterschiedlich großer Kapseln geeignet sein kann. Insbesondere kann dabei das erzeugte Heißgetränk aus dem unten aus der Halterung herausragenden Teil der Aufnahmemittel, insbesondere an dessen Unterseite, austreten.

Dabei können die Aufnahmemittel mehrteilig ausgebildet sein und insbesondere im Betrieb die Kapsel umschließen.

Anspruch 6 sieht vor, dass die Maschine, die insbesondere eine Espressomaschine sein kann, eine erfindungsgemäße Trägervorrichtung umfasst. Die Espressomaschine kann somit mit unterschiedlichen Trägervorrichtungen betrieben werden, so dass mit der Espressomaschine sowohl gemahlener Kaffee, als auch Pads und Kapseln für die Zubereitung des gewünschten Heißgetränks verarbeitet werden können. Insbesondere können dabei unterschiedlichen Aufnahmemittel für unterschiedliche Ausführungsformen von Pads und Kapseln vorgesehen sein.

Die erfindungsgemäßen Trägervorrichtungen eignen sich auch für die Nachrüstung bereits vorhandener Espressomaschinen.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: mehrere Ansichten einer ersten, nicht erfindungsgemäßen Ausführungsform einer Trägervorrichtung ohne Aufnahmemittel,
- Fig. 2: mehrere Ansichten der ersten Ausführungsform einer Trägervorrichtung mit einer ersten Ausführungsform von Aufnahmemitteln,
- Fig. 3: mehrere Ansichten der ersten Ausführungsform einer Trägervorrichtung mit einer zweiten Ausführungsform von Aufnahmemitteln,
- Fig. 4: mehrere Ansichten der ersten Ausführungsform einer Trägervorrichtung mit einer dritten Ausführungsform von Aufnahmemitteln,
- Fig. 5: mehrere Ansichten der ersten Ausführungsform einer Trägervorrichtung mit einer vierten Ausführungsform von Aufnahmemitteln,
- Fig. 6: mehrere Ansichten einer zweiten, erfindungsgemäßen Ausführungsform einer Trägervorrichtung mit Aufnahmemitteln für eine Kapsel.

In den Figuren sind gleiche und funktional gleiche Teile mit gleichen Bezugszeichen versehen.

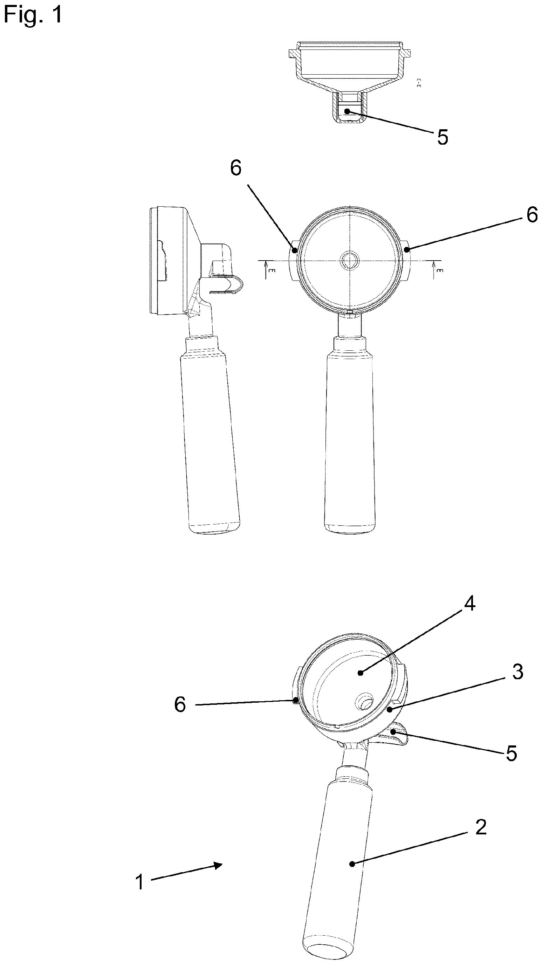

In Fig. 1 ist eine ersten Ausführungsform einer Trägervorrichtung 1 abgebildet, die einen Handgriff 2 und eine mit dem Handgriff 2 verbundene Halterung 3 umfasst. Die Halterung 3 weist eine im Wesentlichen hohlzylindrische Form mit einer Öffnung 4 an der Oberseite und einer Öffnung, insbesondere einem Auslass 5 für das zu erzeugende Heißgetränk, an der Unterseite auf.

An der Außenseite der Halterung 3 sind Verbindungsmittel 6 für die Verbindung mit einer nicht abgebildeten Maschine zur Zubereitung des Heißgetränks angeordnet. Die Verbindungsmittel 6 sind insbesondere als Bajonettmittel ausgebildet und insbesondere für die Verbindung mit einer üblichen Espressomaschine ausgebildet. Die Trägervorrichtung 1 entspricht somit im Wesentlichen einem herkömmlichen Siebträger für eine Espressomaschine.

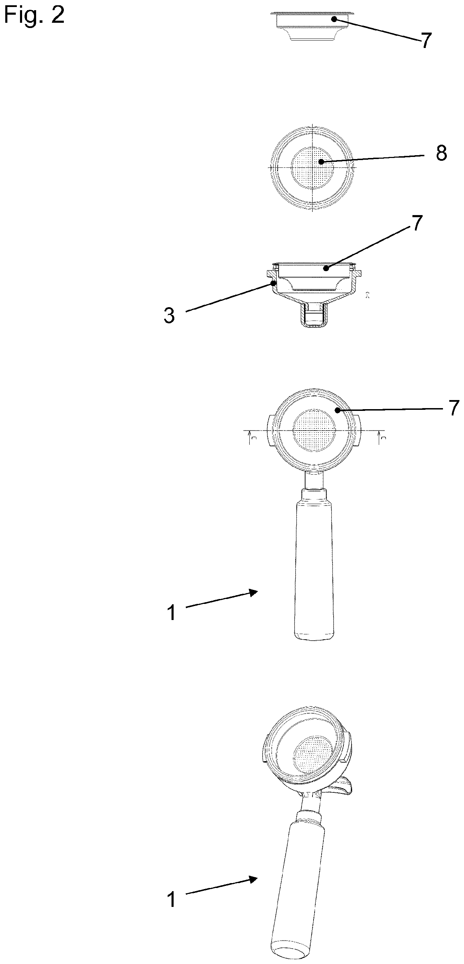

Fig. 2 zeigt Aufnahmemittel 7 für eine Menge an gemahlenem Kaffee, die für die Zubereitung einer Tasse Espresso benötigt wird. Die Aufnahmemittel 7 weisen ein Sieb 8, insbesondere ein Doppelsieb auf, auf dem der gemahlene Kaffee aufliegt. Die Aufnahmemittel 7 entsprechen insbesondere im Wesentlichen dem Siebeinsatz eines herkömmlichen Siebträgers für eine Espressomaschine. Die Aufnahmemittel 7 sind so gestaltet, das sie in die Halterung 3 eingebracht und dort klemmend gehalten werden können.

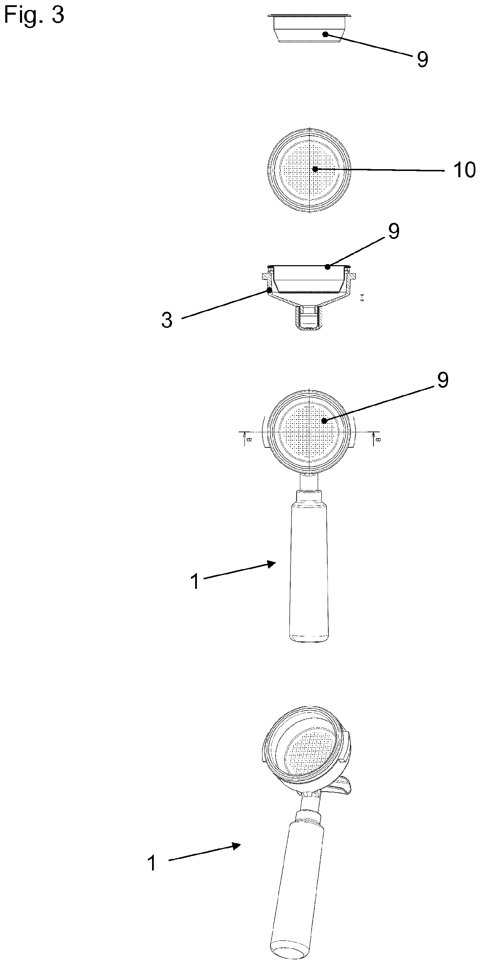

Fig. 3 zeigt Aufnahmemittel 9 für eine Menge an gemahlenem Kaffee, die für die Zubereitung zweier Tassen Espresso benötigt wird. Die Aufnahmemittel 9 weisen ein Sieb 10, insbesondere ein Doppelsieb auf, auf dem der gemahlene Kaffee aufliegt. Die Aufnahmemittel 9 entsprechen insbesondere im Wesentlichen dem Siebeinsatz eines herkömmlichen Siebträgers für eine Espressomaschine. Die Aufnahmemittel 9 sind so gestaltet, das sie in die Halterung 3 eingebracht und dort klemmend gehalten werden können.

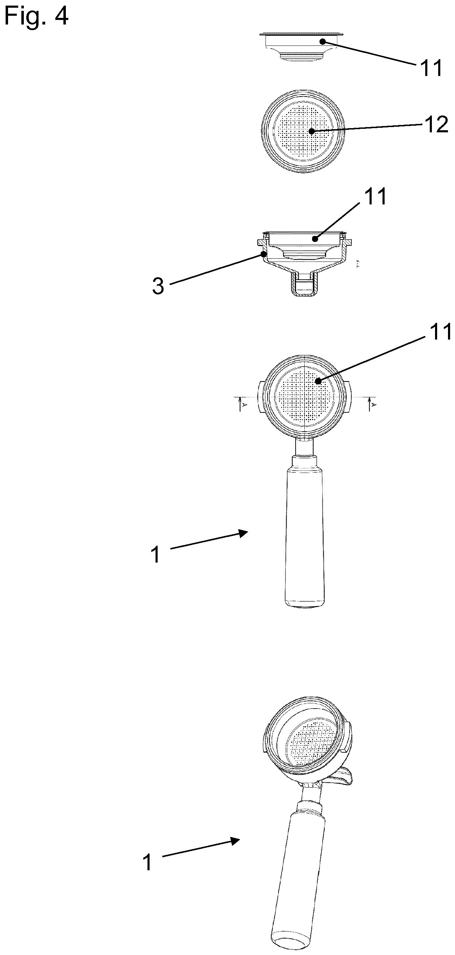

Fig. 4 zeigt Aufnahmemittel 11 für ein nicht abgebildetes Behältnis, insbesondere ein Pad, das das Ausgangsmaterial für das Heißgetränk enthält. Es kann sich dabei um Kaffeepulver aber auch um Kakao oder um Mischungen von Kaffeepulver mit Milchpulver oder Tee oder dergleichen handeln. Die Aufnahmemittel 11 weisen ein Sieb 12, insbesondere ein Doppelsieb auf, auf dem das Pad aufliegt. Bei den Aufnahmemitteln 11 ist das Sieb 12 weiter oben angebracht als bei den Aufnahmemitteln 7. Die Aufnahmemittel 11 sind ebenfalls so gestaltet, das sie in die Halterung 3 eingebracht und dort klemmend gehalten werden können.

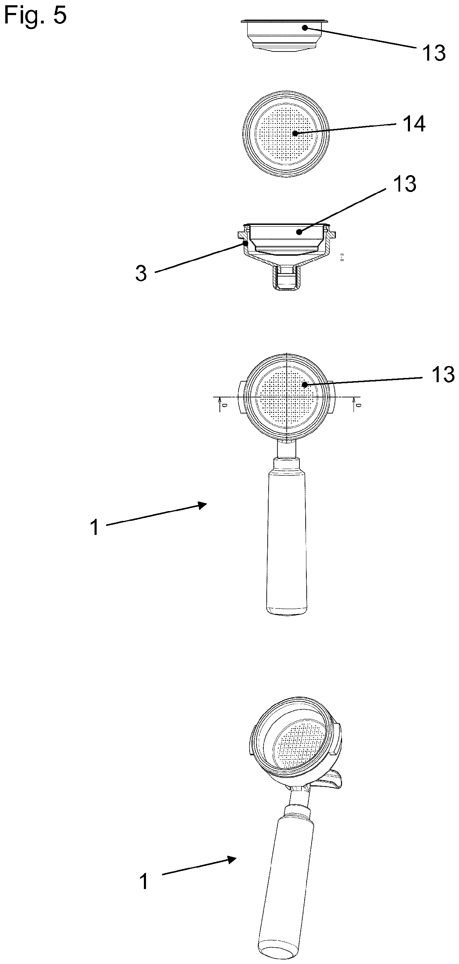

Fig. 5 zeigt Aufnahmemittel 13 für zwei Behältnisse, insbesondere zwei Pads, die jeweils das Ausgangsmaterial für das Heißgetränk enthalten. Es kann sich dabei um Kaffeepulver aber auch um Kakao oder um Mischungen von Kaffeepulver mit Milchpulver oder Tee oder dergleichen handeln. Die Aufnahmemittel 13 weisen ein Sieb 14, insbesondere ein Doppelsieb auf, auf dem das untere der beiden Pads aufliegt. Bei den Aufnahmemitteln 11 ist das Sieb 12 weiter oben angebracht als bei den Aufnahmemitteln 9. Die Aufnahmemittel 11 sind ebenfalls so gestaltet, das sie in die Halterung 3 eingebracht und dort klemmend gehalten werden können.

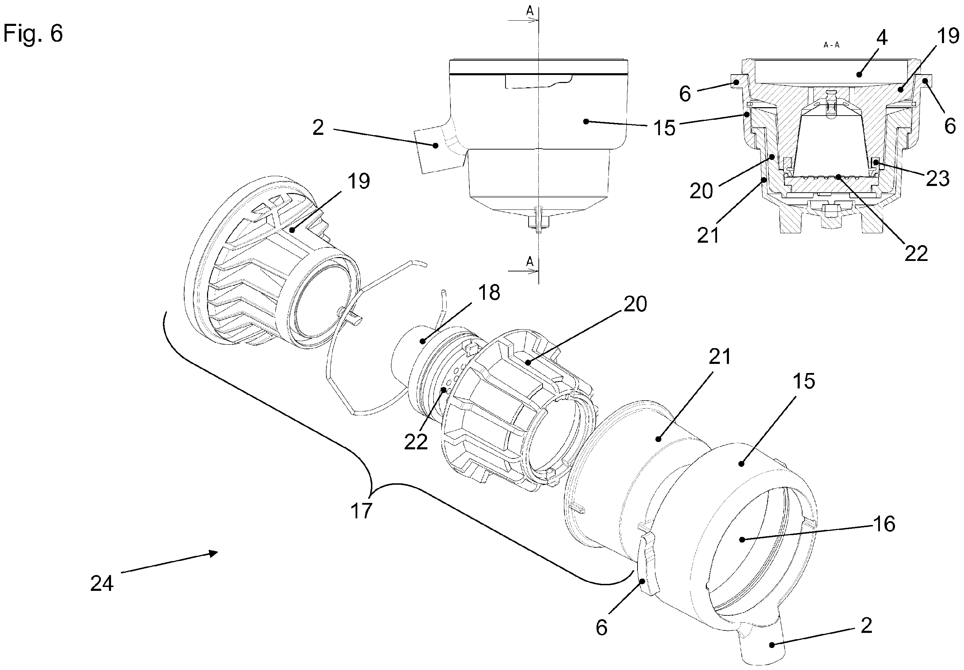

Fig. 6 zeigt eine zweite Ausführungsform einer Trägervorrichtung 24. Diese Trägervorrichtung 24 umfasst ebenfalls einen Handgriff 2 und eine mit dem Handgriff 2 verbundene Halterung 15. Die Halterung 15 weist eine im Wesentlichen hohlzylindrische Form mit einer Öffnung 4 an der Oberseite und einer Öffnung 16 für das zu erzeugende Heißgetränk an der Unterseite auf. Dabei ist die Öffnung 16 an der Unterseite jedoch wesentlich größer als die Öffnung bei der ersten Ausführungsform der Trägervorrichtung 1.

An der Außenseite der Halterung 15 sind Verbindungsmittel 6 für die Verbindung mit einer nicht abgebildeten Maschine zur Zubereitung des Heißgetränks angeordnet. Die Verbindungsmittel 6 sind insbesondere als Bajonettmittel ausgebildet und insbesondere für die Verbindung mit einer üblichen Espressomaschine ausgebildet. Die Halterung 15 der Trägervorrichtung 24 entspricht hinsichtlich ihres Durchmessers und insbesondere hinsichtlich ihrer Verbindungsmittel 6 der Halterung 3 der Trägermittel 1, so dass sie an der gleichen Espressomaschine angebracht werden kann.

Die Trägervorrichtung 24 umfasst weiterhin Aufnahmemittel 17, die eine Kapsel 18, insbesondere eine Kaffeekapsel, aufnehmen können, die das Ausgangsmaterial für das Heißgetränk enthält. Es kann sich dabei um Kaffeepulver aber auch um Kakao oder um Mischungen von Kaffeepulver mit Milchpulver oder Tee oder dergleichen handeln.

Die Aufnahmemittel 17 umfassen mehrere miteinander zu verbindende Teile 19, 20, 21 sowie ein Sieb 22 und eine Dichtung 23. Die Teile 20 und 21 werden herstellerseitig miteinander verbunden und bilden zusammen mit dem Sieb 22 eine erste Einheit. Diese erste Einheit kann von dem Benutzer in die Halterung 15 eingebracht werden. Das Sieb 22 weist dabei auf seiner Oberseite mehrere Vorsprünge auf, die die Unterseite (rechter Rand in Fig. 6) der Kapsel 18 perforieren können, so dass aus dieser Unterseite Flüssigkeit austreten kann.

Die Schnittansicht in der rechten oberen Ecke der Fig. 6 zeigt, dass die erste Einheit unten aus der Öffnung 16 herausragt, wobei insbesondere die Teile 20, 21 abschnittsweise durch die Öffnung 16 hindurchragen. Der obere Rand des Teiles 21 liegt dabei auf einem radial nach innen ragenden Absatz im Inneren der Halterung 15 auf, so dass die erste Einheit nicht nach unten aus der Öffnung 16 herausfallen kann.

Auf die in die Halterung 15 eingebrachte erste Einheit, insbesondere auf das an der Oberseite der Einheit angeordnete Sieb 22 kann die Kapsel 18 mit ihrer Unterseite aufgebracht werden. Im Betrieb tritt das erzeugte Heißgetränk aus dem unten aus der Halterung 15 herausragenden Teil 21 der Aufnahmemittel 17, insbesondere aus dessen Unterseite, aus.

Das Teil 19 wird herstellerseitig mit der Dichtung 23 zu einer zweiten Einheit verbunden. Diese kann von dem Benutzer so in die Halterung 15 eingebracht werden, dass die Dichtung 23 auf dem umlaufenden Rand der Kapsel 18 aufliegt. Dabei kann das Teil 19 die Oberseite (linker Rand in Fig. 6) der Kapsel 18 perforieren, so dass Flüssigkeit durch diese Oberseite eintreten kann.

Die beiden Einheiten der Aufnahmemittel 17 können auch außerhalb der Halterung 15 von dem Benutzer um die Kapsel 18 geschlossen werden und anschließend in die Halterung 15 eingebracht werden. Dabei können wie bei der ersten Ausführungsform der Trägervorrichtung die Aufnahmemittel 17 klemmend in der Halterung 15 gehalten werden.

## Patentansprüche

1. Trägervorrichtung (1, 24) für ein Ausgangsmaterial einer Heißgetränkzubereitung, insbesondere Siebträger, umfassend
- eine Halterung (3, 15), die in Gebrauchsstellung eine Öffnung (4) an der Oberseite und eine Öffnung (16) an der Unterseite aufweist,
- einen Handgriff (2), der mit der Halterung (3, 15) verbunden ist
- Aufnahmemittel (17) für das Ausgangsmaterial, die von und/oder in der Halterung (3, 15) gehalten werden, wobei von der Halterung (3, 15) Aufnahmemittel (17) für die Aufnahme einer Kapsel (18), insbesondere einer Kaffeekapsel, gehalten werden können,
- Verbindungsmittel (6) für die Verbindung mit einer Maschine zur Zubereitung des Heißgetränks, insbesondere einer Espressomaschine, wobei die Verbindungsmittel (6) an der Halterung (3, 15) angeordnet sind,
**dadurch gekennzeichnet, dass** die an der Unterseite der Halterung (15) angeordnete Öffnung (16) derart gestaltet ist, dass durch die Öffnung (16) in Gebrauchsstellung ein Teil (21) der Aufnahmemittel (17) zumindest abschnittsweise nach unten herausragt.

2. Trägervorrichtung (24) nach Anspruch 1, **dadurch gekennzeichnet, dass** die Aufnahmemittel (17) mehrteilig ausgebildet sind.

3. Trägervorrichtung (24) nach einem der Ansprüche 1 oder 2, **dadurch gekennzeichnet, dass** die Aufnahmemittel (17) die Kapsel (18) umschließen.

4. Trägervorrichtung (24) nach einem der Ansprüche 1 bis 3, **dadurch gekennzeichnet, dass** die Aufnahmemittel (17) ein Sieb (22) aufweisen, durch das die aus der Kapsel (18) austretende Flüssigkeit hindurchtreten kann.

5. Trägervorrichtung (24) nach einem der Ansprüche 1 bis 4, **dadurch gekennzeichnet, dass** die Aufnahmemittel (17) Mittel zur Einbringung von Löchern in die Kapsel (18) aufweisen, durch die Flüssigkeit hindurchströmen kann.

6. Maschine zur Zubereitung eines Heißgetränks, insbesondere Espressomaschine, umfassend eine Trägervorrichtung (1) nach einem der Ansprüche 1 bis 5.

## Claims

1. Support device (1, 24) for a starting material of a hot beverage preparation, in particular filter support, comprising
- a holder (3, 15), which in use position has an opening (4) on the top side and an opening (16) on the bottom side,
- a handle (2), which is connected with the holder (3, 15)
- receiving means (17) for the starting material, which are held by and/or in the holder (3, 15), wherein receiving means (17) for the reception of a capsule (18), in particular of a coffee capsule, can be held by the holder (3, 15),
- connecting means (6) for the connection with a machine for the preparation of the hot beverage, in particular an espresso machine, wherein the connecting means (6) are disposed on the holder (3, 15),
**characterised in that** the opening (16) disposed on the bottom side of the holder (15) is formed such that in use position a part (21) of the receiving means (17) protrudes at least partially downwards through the opening (16).

2. Support device (24) according to claim 1, **characterised in that** the receiving means (17) are formed multipart.

3. Support device (24) according to any of claims 1 or 2, **characterised in that** the receiving means (17) enclose the capsule (18).

4. Support device (24) according to any of claims 1 to 3, **characterised in that** the receiving means (17) have a filter (22), through which the liquid emerging from the capsule (18) can pass.

5. Support device (24) according to any of claims 1 to 4, **characterised in that** the receiving means (17) have means for introducing holes into the capsule (18), through which holes the liquid can flow.

6. Machine for preparing a hot beverage, in particular an espresso machine, comprising a support device (1) according to any of claims 1 to 5.

## Revendications

1. Dispositif porteur (1, 24) pour une matière première d'une préparation de boisson chaude, en particulier porte-filtre, comprenant
- un support (3, 15), qui comporte en position d'utilisation une ouverture (4) en haut et une ouverture (16) en bas,
- une poignée (2), qui est reliée au support (3, 15),
- des moyens de réception (17) pour la matière première, qui sont maintenus par et/ou dans le support (3, 15), lesquels moyens de réception (17) peuvent être maintenus par le support (3, 15) afin de recevoir une capsule (18), en particulier une capsule de café,
- des moyens de liaison (6) pour la liaison avec une machine destinée à la préparation de la boisson chaude, en particulier une machine à expresso, lesquels moyens de liaison (6) sont agencés au niveau du support (3, 15),
**caractérisé en ce que** l'ouverture (16) agencée au niveau du bas du support (15) est conçue de telle sorte que, en position d'utilisation, une partie (21) des moyens de réception (17) dépasse au moins partiellement vers le bas à travers l'ouverture (16).

2. Dispositif porteur (24) selon la revendication 1, **caractérisé en ce que** les moyens de réception (17) sont réalisés en plusieurs parties.

3. Dispositif porteur (24) selon l'une quelconque des revendications 1 ou 2, **caractérisé en ce que** les moyens de réception (17) entourent la capsule (18).

4. Dispositif porteur (24) selon l'une quelconque des revendications 1 à 3, **caractérisé en ce que** les moyens de réception (17) comportent un filtre (22) à travers lequel peut passer le liquide qui sort de la capsule (18).

5. Dispositif porteur (24) selon l'une quelconque des revendications 1 à 4, **caractérisé en ce que** les moyens de réception (17) comportent des moyens pour réaliser des trous dans la capsule (18), trous par lesquels peut passer le liquide.

6. Machine destinée à la préparation d'une boisson chaude, en particulier machine à expresso, comprenant un dispositif porteur (1) selon l'une quelconque des revendications 1 à 5.
